# EUROPÄISCHE PATENTANMELDUNG

(11) **EP 2 517 988 A1**
(43) Veröffentlichungstag der Anmeldung: **31.10.2012**
(21) Anmeldenummer: 12165762.1
(22) Anmeldetag: 26.04.2012
(51) Int. Cl.: B65G 47/14

(54) **Vorrichtung und Verfahren zum Vereinzeln und/oder Sortieren von benutzten Getränkebehältern**

(30) Priorität: 27.04.2011 DE 102011002289
(71) Anmelder: Brenner, Stefan, 57520 Rosenheim (DE)
(72) Erfinder: Brenner, Stefan, 57520 Rosenheim (DE)
(74) Vertreter: Müller, Eckhard

(57) **Zusammenfassung**

Die Erfindung betrifft eine Vorrichtung (1) zum Vereinzeln und/oder zum Sortieren von benutzten Getränkebehältern (2), insbesondere Kunststoffflaschen und/oder Dosen aus PVC oder Aluminium. Die Vorrichtung weist ein, vorzugsweise um eine horizontale Rotationsachse (3), rotierbar gelagertes Schaufelrad (4) auf.

## Beschreibung

Die Erfindung betrifft eine Vorrichtung zum Vereinzeln und/oder zum Sortieren von benutzten Getränkebehältern.

Die Erfindung betrifft außerdem ein Verfahren zum Handhaben, insbesondere zum Vereinzeln und/oder zum Sortieren, von Getränkebehältern.

Getränke werden üblicherweise in Getränkebehältern, wie Flaschen, insbesondere PET-Flaschen, oder Dosen verkauft. Zumeist werden die leeren Getränkebehälter in einem Pfandsystem rückgeführt, gesammelt, sortiert und schließlich wieder gefüllt oder einem Recycling-Prozess zugeführt.

Insbesondere zur automatischen Behandlung von gesammelten benutzten Getränkebehältern, die zumeist einer unsortierten und ungeordneten Aufhäufung von unterschiedlichen Getränkebehältern, insbesondere Flaschen und/oder Dosen unterschiedlicher Form und Größe, vorliegen, ist es nötig, diese zu vereinzeln und ggf. zu sortieren oder vorzusortieren. Hierzu werden spezielle Vorrichtungen verwendet.

Beispielsweise ist aus DE 21 2009 000 004 U1 eine Vorrichtung zum Zuführen von Objekten wie etwa gebrauchten Getränkeverpackungen zu einer Aufzeichnungs- und/oder Sortiereinheit bekannt. Die Objekte werden auf einer Empfangeinrichtung zugeführt und mit einer vorbestimmten Ausrichtung auf wenigstens einer Fördereinrichtung transportiert. Die Empfangseinrichtung umfasst wenigstens einen Empfangstisch mit zwei oder mehr Drehscheiben, wobei wenigstens eine Fördereinrichtung tangential relativ zu der wenigstens einen Drehscheibe vorgesehen ist, wobei eine Umfangsbegrenzung wenigstens einen Teil des oder der Empfangstische im wesentlichen umschreibt und wobei die Fördereinrichtungen angeordnet sind, um die Objekte von einer Drehscheibe zur nächsten Drehscheibe zu transportieren.

Es ist die Aufgabe der vorliegenden Erfindung, eine Vorrichtung und ein Verfahren zum Vereinzeln und/oder zum Sortieren von benutzten Getränkebehältern anzugeben, die besonders zuverlässig und effektiv arbeitet bzw. das besonders zuverlässig und effizient ausführbar ist.

Die Aufgabe wird durch eine Vorrichtung gelöst, die dadurch gekennzeichnet ist, dass die Vorrichtung ein, vorzugsweise um eine horizontale Rotationsachse, rotierbar gelagertes Schaufelrad aufweist.

In Verfahrensmäßiger Hinsicht wird die Aufgabe durch ein Verfahren gelöst, das dadurch gekennzeichnet ist, dass die Getränkebehälter einzeln und/oder selektiv mittels eines Schaufelrades, insbesondere eines Schaufelrades mit in seinem Inneren angeordneten Schaufeln, aufgenommen werden.

Erfindungsgemäß wurde erkannt, dass ein schnelles und effizientes Aufnehmen einzelner Getränkebehälter aus einer unsortierten und ungeordneten Aufhäufung von unterschiedlichen Getränkebehältern mittels eines Schaufelrades schnell und in äußerst zuverlässiger Weise erfolgen kann. Hierbei kann geleichzeitig, was im Detail noch näher beschrieben wird, gleichzeitig ein Sortieren oder zumindest ein Vorsortieren erfolgen. Insbesondere kann vorteilhaft vorgesehen sein, dass das Schaufelrad eine Sortierfunktion ausübt.

Bei einer vorteilhaften Ausführung ist vorgesehen, dass das Schaufelrad in seinem Inneren angeordnete Schaufeln aufweist und/oder dass das Schaufelrad eine äußeres, insbesondere zylinderförmiges, Rad aufweist, das - direkt oder indirekt - nach innen gerichtete Schaufeln trägt. Bei einer solchen Ausführung sind die einzelnen Schaufeln besonders gut geschützt untergebracht, ohne dass damit ein Verlust an Förderleistung einhergeht. Darüber hinaus ermöglicht es eines solche Anordnung der Schaufeln, mit dem Schaufelrad selbst zumindest einen Teil eines Behälters für die zu vereinzelnden und/oder zu sortierenden Getränkebehälter zu bilden, was in Detail nachfolgend genauer ausgeführt wird.

Bei den Getränkebehältern kann es sich insbesondere um Flaschen, insbesondere Kunststoffflaschen, Dosen, beispielsweise aus PVC oder Aluminium, handeln.

Bei einer vorteilhaften Ausführung ist jede der Schaufeln zum Aufnehmen einer einzigen der zu vereinzelnden und/oder zu sortierenden Getränkebehälter dimensioniert und angeordnet. Alternativ oder zusätzlich kann vorteilhaft vorgesehen sein, dass jede der Schaufeln jeweils eine Aufnahme aufweist, die ausschließlich zum Aufnehmen einer einzigen der zu vereinzelnden und/oder zu sortierenden Getränkebehälteren dimensioniert und angeordnet ist. Bei diesen Ausführungen findet jeweils nur eine einzige Getränkebehälter in einer Schaufel Platz, so dass auf einfache Weise sichergestellt, dass nicht versehentlich gleichzeitig zwei oder mehr Getränkebehälter aufgenommen werden.

Dieses Prinzip, die Schaufeln bzw. die Aufnahmen der Schaufeln an die aufzunehmenden Getränkebehälter anzupassen kann erfindungsgemäß in besonders vorteilhafter Weise dahingehend optimiert werden, dass von dem Schaufelrad ausschließlich Getränkebehälter mit vorbestimmten und/oder vorbestimmbaren Eigenschaften, insbesondere vorbestimmter Form und/oder Größe, aufgenommen werden, während die übrigen Getränkebehälter nicht - oder erst in einem späteren Verfahrensschritt, beispielsweise nach Austauschen der Schaufeln oder nach Verändern der Schaufeln, aufgenommen werden.

In erfindungsgemäßer Weise kann vorgesehen sein, dass die Schaufeln, insbesondere hinsichtlich Form und Größe, zum selektiven Aufnehmen von Getränkebehälteren mit vorbestimmten und/oder vorbestimmbaren Eigenschaften, insbesondere vorbestimmter Form und/oder Größe, ausgebildet sind. Alternativ oder zusätzlich kann vorteilhaft vorgesehen sein, dass jede der Schaufeln jeweils eine Aufnahme aufweist, die jeweils derart dimensioniert und angeordnet ist, dass sie ausschließlich und selektiv Getränkebehälter mit vorbestimmten und/oder vorbestimmbaren Eigenschaften, insbesondere vorbestimmter Form und/oder Größe, aufnimmt. Beispielsweise kann die Form und die Größe der Aufnahme derart gestaltet sein, dass ausschließlich Getränkebehälter einer bestimmten Form und Größe von der Aufnahme "eingefangen" werden, während größere Getränkebehälter nicht hineinpassen und während kleinere - beispielsweise weil sie keinen Halt finden - automatisch wieder hinausfallen.

Bei einer besonderen Ausführung weist jede der Schaufeln jeweils eine längliche Aufnahme auf, die hinsichtlich ihrer Längserstreckung parallel zur Rotationsachse des Schaufelrades angeordnet sind. Alternativ oder zusätzlich kann vorgesehen sein, dass jede der Schaufeln jeweils eine Aufnahme aufweist, die derart ausgebildet ist, dass ein in die Aufnahme eingebrachter länglicher Getränkebehälter hinsichtlich seiner Längserstreckung parallel zur Rotationsachse des Schaufelrades angeordnet ist. Jede dieser Ausführungen erlaubt ein besonders zuverlässiges Aufnehmen von Getränkebehältern aus einer Anhäufung von ungeordneten und/oder unsortierten Getränkebehältern. Außerdem erlauben diese Ausführungen auf besonders einfache Weise ein Übergeben der einzelnen aufgenommenen Getränkebehälter an eine Fördereinrichtung, beispielsweise an ein Förderband.

Bei einer besonderen Ausführung weist die erfindungsgemäße Vorrichtung einen Behälter, insbesondere einer Wanne, zum Aufnehmen einer Vielzahl von, insbesondere unterschiedlichen und/oder ungeordneten, Getränkebehältern auf.

Es kann beispielsweise vorgesehen sein, dass das Schaufelrad zumindest teilweise in dem Behälter angeordnet ist.

Bei einer ganz besonders vorteilhaften und störunanfälligen Ausführung ist vorgesehen, dass das Schaufelrad - zumindest teilweise - Teil des Behälters ist und/oder dass zumindest ein Teil des Behälters durch einen kontinuierlich wechselnden Teil des rotierenden Schaufelrades gebildet ist. Eine solche Ausführung hat den ganz besonderen Vorteil, dass ein Einklemmen von Getränkebehältern zwischen einer Behälterwandung oder einem Behälterboden einerseits und dem Schaufelrad andererseits wirkungsvoll vermieden ist. Darüber hinaus spart eine solche Ausführung durch die Doppelfunktion des Schaufelrades Material ein.

Bei einer ganz besonders vorteilhaften Ausführungsform ist der Behälter durch einen, insbesondere auf Grund der Rotation kontinuierlich wechselnden, Teil des rotierenden Schaufelrades und durch, vorzugsweise trichterartige, beidseitig axial des Schaufelrades angeordnete, vorzugsweise feststehende, Abschlusselemente gebildet.

Wie bereits erwähnt, kann die erfindungsgemäße Vorrichtung vorteilhaft zumindest ein Förderband aufweisen, das von dem Schaufelrad aufgenommene Getränkebehälter empfängt.

Eine Übergabe von aufgenommenen Getränkebehältern an das Förderband ist besonders zuverlässig möglich, wenn das Förderband parallel zur Rotationsachse des Schaufelrades angeordnet ist. Insbesondere kann vorteilhaft vorgesehen sein, dass das Förderband in den Innenbereich des Schaufelrades hineinragt und/oder dass das Förderband durch den Innenbereich des Schaufelrades hindurch verläuft.

Bei einer besonderen Ausführung ist das Förderband v-förmig ausgebildet, so dass ein mittels des Schaufelrades bereits erreichte Ausrichtung der Getränkebehälter beim Weitertransport erhalten bleibt.

Bei einer ganz besonders zuverlässig arbeitenden Ausführung ist das Schaufelrad derart ausgebildet, dass aufgenommene Getränkebehälter im Bereich des oberen Scheitelpunktes aus den Schaufeln hinaus und vorzugsweise direkt auf ein Förderband fallen. Hierbei können zusätzliche Führungselemente vorgesehen sein, die die Getränkebehälter beim Herabfallen führen und ein Vorbeifallen an dem Förderband verhindern.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: eine erfindungsgemäße Vorrichtung in einer Querschnittsdarstellung und
- Fig. 2: die erfindungsgemäße Vorrichtung in einer seitlichen Ansicht.

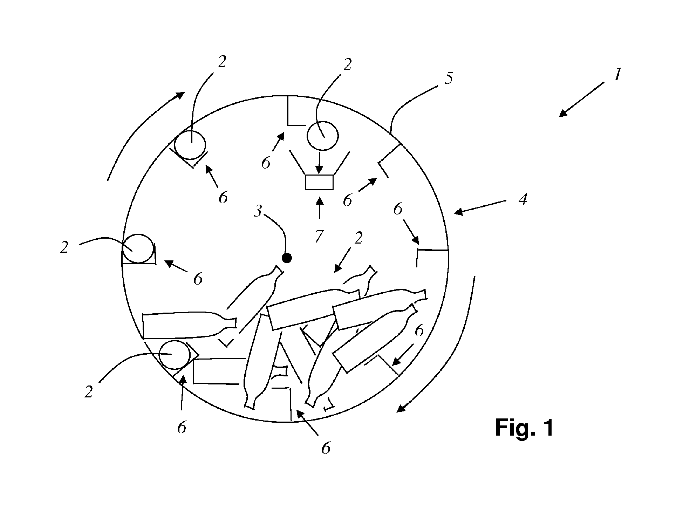

Figur 1 zeigt eine Vorrichtung 1 zum Vereinzeln und/oder Sortieren von benutzten Getränkebehältern 2 in einer schematischen Querschnittsdarstellung. Die Vorrichtung 1 weist ein um eine horizontale Rotationsachse 3 rotierbar gelagertes Schaufelrad 4 auf. Das Schaufelrad 4 besteht im Wesentlichen aus einem zylinderförmigen Rad 5, das auf seiner Innenseite nach innen gerichtete Schaufeln 6 trägt.

Jede der Schaufeln 6 ist zum Aufnehmen einer einzigen der zu vereinzelnden bzw. zu sortierenden Getränkebehälter 2 ausgebildet. Dies nämlich derart, dass jede der Schaufeln so dimensioniert und angeordnet ist, dass lediglich ein einziger Getränkebehälter darin Platz findet.

Der Übersichtlichkeit halber sind in der Figur lediglich Getränkebehälter 2 gleicher Form und Größe dargestellt. Es kann jedoch auch vorgesehen sein, dass die Anhäufung der zu vereinzelnden und zu sortierenden Getränkebehälter 2 aus einer Vielzahl unterschiedlicher, insbesondere unterschiedlich großer und unterschiedlich geformter und ungeordneter Getränkebehälter besteht. Hierbei kann vorgesehen sein, dass die Schaufeln 6 derart ausgebildet sind, dass sukzessive - unabhängig von ihrer Form und Größe - sämtliche Behälter aufgenommen werden, es kann jedoch alternativ auch vorgesehen sein, dass die Schaufeln zu ausschließlichen und selektiven Aufnahme von Behältern mit einer bestimmten Form und/oder Größe ausgebildet sind. Insbesondere kann vorgesehen sein, dass die Aufnahmen - beispielsweise mittels einer Bajonetthalterung - einfach auswechselbar ausgestaltet sind.

Bei der gezeigten Vorrichtung 1 dreht sich das Schaufelrad 4 im Uhrzeigersinn um die Rotationsachse 3 und nimmt dabei in seinem unteren Bereich mittels der Schaufeln 6 Getränkebehälter auf und transportiert diese nach oben. Im Bereich des oberen Scheitelpunktes fallen die aufgenommenen Getränkebehälter 2 aus den Aufnahmen 6 heraus, direkt auf ein parallel zur Rotationsachse 3 durch den Innenbereich des Schaufelrades 4 verlaufendes Förderband 7. Das Förderband 7 ist im Wesentlichen V-förmig ausgebildet, so dass die mittels des Schaufelrades 4 bereits erreichte Ausrichtung der Getränkebehälter (vorliegend steht deren Längserstreckung senkrecht zur Papierebene) beim Weitertransport mittels des Förderbandes 7 erhalten bleibt.

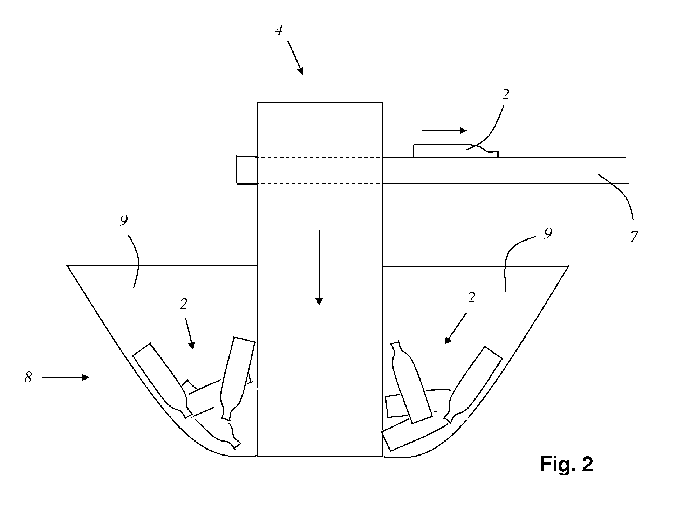

Figur 2 zeigt die erfindungsgemäße Vorrichtung in einer Seitendarstellung. Es ist deutlich zu erkennen, dass das Schaufelrad 4 - genauer gesagt jeweils die untere Hälfte des rotierenden Schaufelrades - den Mittelteil eines Behälters 8 zum Aufnehmen einer Vielzahl von unterschiedlichen und/oder ungeordneten Getränkebehältern 2 bildet. An das Schaufelrad 4 schließen sich beidseitig feststehende, trichterartige Abschlusselemente 9 als weitere Bestandteile des Behälters an.

In Figur 2 ist darüber hinaus deutliche zu erkennen, dass das Förderband 7 sich durch den Innenbereich des Schaufelrades 4 hindurch erstreckt. Exemplarisch ist ein Getränkebehälter 2 eingezeichnet, der, nachdem er mit dem Schaufelrad 4 aufgenommen und nach oben transportiert wurde, auf das Förderband 7 gefallen ist und von diesem weiter transportiert wird.

### Bezugszeichenliste

- 1: Vorrichtung zum Vereinzeln und/oder Sortieren
- 2: Getränkebehälter
- 3: Rotationsachse
- 4: Schaufelrad
- 5: Rad
- 6: Schaufeln
- 7: Förderband
- 8: Behälter
- 9: tricherförmige Abschlusselemente des Behälters 8

## Patentansprüche

1. Vorrichtung (1) zum Vereinzeln und/oder zum Sortieren von benutzten Getränkebehältern (2), insbesondere Kunststoffflaschen und/oder Dosen aus PVC oder Aluminium, wobei die Vorrichtung (1) ein, vorzugsweise um eine horizontale Rotationsachse (3), rotierbar gelagertes Schaufelrad (4) aufweist.

2. Vorrichtung (1) nach Anspruch 1, **dadurch gekennzeichnet, dass** das Schaufelrad (4) in seinem Inneren angeordnete Schaufeln (6) aufweist und/oder dass das Schaufelrad (4) eine äußeres, insbesondere zylinderförmiges, Rad (5) aufweist, das - direkt oder indirekt - nach innen gerichtete Schaufeln (6) trägt.

3. Vorrichtung (1) nach Anspruch 2, **dadurch gekennzeichnet, dass** jede der Schaufeln (6) zum Aufnehmen einer einzigen der zu vereinzelnden und/oder zu sortierenden Getränkebehälter (2) dimensioniert und angeordnet ist und/oder dass jede der Schaufeln (6) jeweils eine Aufnahme aufweist, die ausschließlich zum Aufnehmen einer einzigen der zu vereinzelnden und/oder zu sortierenden Getränkebehälter (2) dimensioniert und angeordnet ist.

4. Vorrichtung (1) nach einem der Ansprüche 2 oder 3, **dadurch gekennzeichnet, dass** das Schaufelrad (4) eine Sortierfunktion ausübt und/oder dass die Schaufeln (6), insbesondere hinsichtlich Form und Größe, zum selektiven Aufnehmen von Getränkebehältern (2) mit vorbestimmten und/oder vorbestimmbaren Eigenschaften, insbesondere vorbestimmter Form und/oder Größe, ausgebildet sind und/oder dass jede der Schaufeln (6) jeweils eine Aufnahme aufweist, die jeweils derart dimensioniert und angeordnet ist, dass sie ausschließlich und selektiv Getränkebehälter (2) mit vorbestimmten und/oder vorbestimmbaren Eigenschaften, insbesondere vorbestimmter Form und/oder Größe, aufnimmt.

5. Vorrichtung (1) nach einem der Ansprüche 2 bis 4, **dadurch gekennzeichnet, dass** jede der Schaufeln (6) jeweils eine längliche Aufnahme aufweist, die hinsichtlich ihrer Längserstreckung parallel zur Rotationsachse (3) des Schaufelrades (4) angeordnet sind und/oder dass jede der Schaufeln (6) jeweils eine Aufnahme aufweist, die derart ausgebildet ist, dass in die Aufnahme eingebrachte längliche Getränkebehälter (2) hinsichtlich ihrer Längserstreckung parallel zur Rotationsachse (3) des Schaufelrades (4) angeordnet sind.

6. Vorrichtung (1) nach einem der Ansprüche 1 bis 5, **dadurch gekennzeichnet, dass** die Vorrichtung (1) einen Behälter (8), insbesondere einer Wanne, zum Aufnehmen einer Vielzahl von, insbesondere unterschiedlichen und/oder ungeordneten, Getränkebehältern (2) aufweist.

7. Vorrichtung (1) nach Anspruch 6, **dadurch gekennzeichnet, dass** das Schaufelrad (4) - zumindest teilweise - Teil des Behälters (8) ist und/oder dass zumindest ein Teil des Behälters (8) durch einen kontinuierlich wechselnden Teil des rotierenden Schaufelrades (4) gebildet ist.

8. Vorrichtung (1) nach Anspruch 6, **dadurch gekennzeichnet, dass** das Schaufelrad (4) zumindest teilweise in dem Behälter (8) angeordnet ist.

9. Vorrichtung (1) nach einem der Ansprüche 6 bis 8, **dadurch gekennzeichnet, dass** der Behälter (8) durch einen, insbesondere auf Grund der Rotation kontinuierlich wechselnden, Teil des rotierenden Schaufelrades (4) und durch, vorzugsweise trichterartige, beidseitig axial des Schaufelrades (4) angeordnete, vorzugsweise feststehende, Abschlusselemente (9) gebildet ist.

10. Vorrichtung (1) nach einem der Ansprüche 1 bis 9, **dadurch gekennzeichnet, dass** die Vorrichtung (1) zumindest ein Förderband (7) aufweist, das von dem Schaufelrad (4) aufgenommene Getränkebehälter (2) empfängt.

11. Vorrichtung (1) nach Anspruch 10, **dadurch gekennzeichnet, dass** das Förderband (7) parallel zur Rotationsachse (3) des Schaufelrades (4) angeordnet ist und/oder dass das Förderband (7) in den Innenbereich des Schaufelrades (4) hineinragt und/oder dass das Förderband (7) durch den Innenbereich des Schaufelrades (4) hindurch verläuft und/oder dass das Förderband (7) V-förmig ausgebildet ist.

12. Vorrichtung (1) nach einem der Ansprüche 1 bis 11, **dadurch gekennzeichnet, dass** das Schaufelrad (4) derart ausgebildet ist, dass aufgenommene Getränkebehälter (2) im Bereich des oberen Scheitelpunktes aus den Schaufeln (6) fallen und/oder dass das Schaufelrad (4) derart ausgebildet ist, dass aufgenommene Getränkebehälter (2) im Bereich des oberen Scheitelpunktes aus den Schaufeln (6) und auf ein Förderband (7) fallen.

13. Verfahren zum Handhaben, insbesondere zum Vereinzeln und/oder zum Sortieren, von Getränkebehältern (2), **dadurch gekennzeichnet, dass** die Getränkebehälter (2) einzeln und/oder selektiv mittels eines Schaufelrades (4), insbesondere eines Schaufelrades mit in seinem Inneren angeordneten Schaufeln (6), aufgenommen werden.

14. Verfahren nach Anspruch 13, **dadurch gekennzeichnet, dass** die Schaufeln (6) des Schaufelrades (4) insbesondere hinsichtlich Form und Größe, zum selektiven und/oder einzelnen Aufnehmen von Getränkebehältern (2) mit vorbestimmten Eigenschaften, insbesondere vorbestimmter Form und/oder Größe, ausgewählt werden.

15. Verfahren nach Anspruch 13 oder 14, **dadurch gekennzeichnet, dass** das Schaufelrad (4) derart angeordnet wird, dass es - zumindest teilweise - Teil des Behälters (8) ist und/oder dass zumindest ein Teil des Behälters (8) durch einen kontinuierlich wechselnden Teil des rotierenden Schaufelrades (4) gebildet ist und/oder dass das Schaufelrad (4) zumindest teilweise in dem Behälter (8) angeordnet ist.
